# EUROPEAN PATENT APPLICATION

(11) **EP 1 468 714 A1**
(43) Date of publication of application: **20.10.2004**
(21) Application number: 04251957.9
(22) Date of filing: 01.04.2004
(51) Int. Cl.: B01D 27/08

(54) **Reversible element guide**

(30) Priority: 04.04.2003 US 407399
(71) Applicant: Arvin Technologies, Inc., Troy, MI 48084 (US)
(72) Inventor: Frye, Randy C., Fayettevillel, North Carolina 28306 (US)
(74) Representative: Croston, David

(57) **Abstract**

A fluid filter assembly including a canister having a closed end and an open end; a filter element assembly disposed within the canister and having a first end adjacent the closed end of the canister and a second end adjacent the open end of the canister; and a reversible element guide disposed within the canister between the closed end and the first end of the filter element assembly. The reversible element guide has a first side and a second side, the first side shaped substantially the same as the second side. The reversible element guide is positioned in either a first position, wherein the first side bears against the closed end of the canister or a second position, wherein the second side bears against the closed end of the canister. The reversible element guide may be a wave spring having a ring shape and a plurality of undulations.

## Description

### BACKGROUND OF THE INVENTION

### 1. Field of the Invention.

The present invention relates to fluid filters, particularly, oil filters. More specifically, the present invention pertains to element guides for use in oil filters.

### 2. Description of the Related Art.

Filters, such as lubricating oil filters, air filters and fuel filters, are commonly included in internal combustion systems for the purpose of filtering out impurities, which can cause damage to the moving parts of the engine. Oil filters, generally, include a cylindrical canister and a filter element assembly. The cylindrical canister includes a dome-shaped closed end and an opposite open end. At the open end is attached an end plate having a central fluid outlet and a plurality of fluid inlets. The filter element assembly is disposed within the canister and typically includes a cylindrical center tube, a filter element disposed about the center tube, and a pair of end caps mounted on either end of the filter element.

Oil circulates through the oil filter by first entering the canister from the engine via the fluid inlets. An anti-drainback valve is often included to keep the oil from exiting back through the fluid inlets. Oil then flows through the filter element and into the center tube through apertures in the center tube wall. The filtered oil then exits the filter through the central fluid outlet and flows to the engine. A relief mechanism is also typically included to allow unfiltered oil to bypass the filter element and to relieve pressure within the filter when the filter element becomes clogged.

To help secure and maintain the filter element assembly in position within the canister, an element guide is commonly disposed between the dome-shaped closed end of the canister and the end cap of the filter element assembly. One known element guide is generally elongate in shape and includes a substantially circular protuberance in the center and two springlike arms extending downwardly from the circular protuberance. A flange extends laterally from the end of each arm. The circular protuberance fits within a depression located in the center of the end cap nearest the dome-shaped closed end of the canister. The arms extend away from the end cap toward the closed end of the canister and the flanges on the end of each arm bear against the dome-shaped closed end of the canister. The arms of the element guide provide a cantilever spring function against the end cap, thereby causing the filter element to firmly seat against the end plate at the open end of the canister and spacing the filter element assembly from the closed end of the canister.

Generally, during assembly, the element guide is deposited in the canister followed by the filter element assembly. Finally, the end plate is affixed to the open end of the canister. In order for the element guide to function properly, the element guide must be deposited into the canister right side up; that is, with the arms extending toward the closed end of the canister and the circular protuberance protruding toward the open end of the canister. If the element guide is deposited in the canister up-side-down, the filter element assembly may not properly seat itself within the canister, ultimately resulting in a defective oil filter. Automated assembly of an oil filter that utilizes this element guide is often difficult and/or expensive to effectively achieve because the element guide must be positioned right side up. Consequently, to ensure proper deposition of the element guides, element guides are often manually inserted into the canister resulting in a costly and inefficient assembly process. In addition, prior element guides are often custom designed, sized and manufactured so that the circular protuberance fits within the depression in the end cap, which may increase the cost of manufacture. Furthermore, prior element guides have been known to provide inconsistent spring rates or load deflection characteristics resulting in inconsistency from filter to filter. Therefore, a need remains for an improved element guide that provides a consistent load deflection rate and enables a more efficient and/or less expensive oil filter assembly process.

### SUMMARY OF THE INVENTION

The present invention provides a fluid filter assembly including a canister having a closed end and an opposite open end. A filter element assembly is disposed within the canister and has a first end adjacent the closed end of the canister and an opposite second end adjacent the open end of the canister. A reversible element guide is disposed within the canister between the closed end of the canister and the first end of the filter element assembly.

In a related aspect, the reversible element guide is a wave spring having a ring shape and a plurality of undulations. The wave spring may be either a single turn or multi-turn wave spring.

In another aspect, the reversible element guide has a first side and a second side and the first side is shaped substantially the same as the second side. The reversible element guide is positioned in either one of two positions, the two positions consisting of a first position wherein the first side bears against the closed end of the canister and a second position wherein the second side bears against the closed end of the canister.

In still another aspect of the present invention, the first end of the filter assembly comprises an outer perimeter region and the reversible element guide bears against the outer perimeter region of the first end of the filter assembly.

Another embodiment of the present invention provides a canister having a closed end and an opposite open end. A filter element assembly is disposed within the canister and has a first end adjacent the closed end of the canister and an opposite second end adjacent the open end of the canister. The first end includes an outer perimeter region. A reversible element guide is disposed between the closed end of the canister and the first end of the filter element assembly and bears against the outer perimeter region of the first end of the filter element assembly.

In a related aspect, the element guide has a first side and a second side, the first side shaped substantially the same as the second side. The reversible element guide is positioned in either a first position wherein the first side bears against the outer perimeter of the first end of the filter element or a second position wherein the second side bears against the outer perimeter of the first end of the filter element.

In a further aspect, the reversible element guide is a wave spring having a ring shape and a plurality of undulations.

Still another embodiment of the present invention provides a fluid filter assembly comprising a canister having closed end and an opposite open end; a filter element assembly disposed within the canister and having a first end adjacent the closed end and an opposite second end adjacent the open end; and a wave spring element guide disposed within the canister between the closed end of the canister and the first end of the filter element assembly. The wave spring element guide has a ring shape and a plurality of undulations.

In a related aspect, the element guide has a first side and a second side, the first side shaped substantially the same as the second side. The wave spring element guide is reversible such that it is positioned in either a first position, wherein the first side bears against the closed end of the canister, or a second position, wherein the second side bears against the closed end of the canister.

In another related aspect, the first end of the filter assembly comprises an outer perimeter region and the wave spring element bears against the outer perimeter region of the first end of the filter assembly.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:

FIG. 1 is a partial cross-section view of an oil filter assembly according to one embodiment of the present invention;

FIG. 2 is a side view of a reversible element guide according to the present invention;

FIG. 3 is a top view of the reversible element guide of FIG. 2;

FIG. 4 is a cross-section view of the reversible element guide of FIG. 3 taken along lines 4-4; and

FIG. 5 is a cross-section view of an oil filter assembly according to another embodiment of the present invention.

### DETAILED DESCRIPTION

The embodiments hereinafter disclosed are not intended to be exhaustive or to limit the invention to the precise forms disclosed in the following description. Rather the embodiments are chosen and described so that others skilled in the art may utilize its teachings.

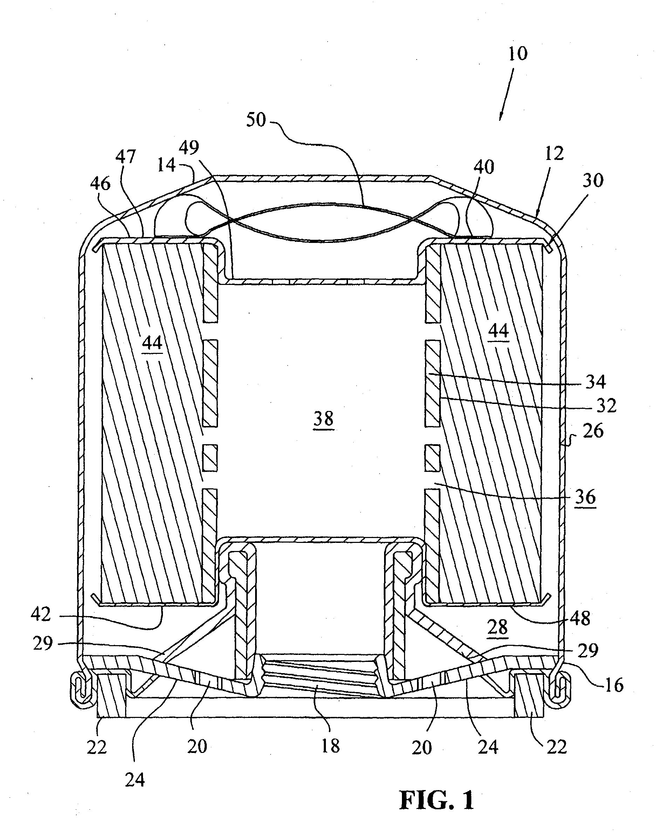

Referring first to FIG. 1, fluid filter assembly 10 generally includes canister 12 and filter element assembly 30. Canister 12 has closed end 14, open end 16 and cylindrical canister wall 26 defining hollow 28. At open end 16 is bottom assembly 24, which includes central fluid outlet 18 and plural fluid inlets 20. Central fluid outlet 18 is typically internally threaded for screwing fluid filter assembly 10 onto a complementary hollow and threaded bolt (not shown) on the engine (not shown). Bottom assembly 24 also commonly includes seating gasket 22 for sealing fluid filter assembly 10 to engine (not shown), and anti-drain back valve 29 for preventing fluid from draining back through inlets 20 and acting as a gasket between end cap 48 and central fluid outlet 18. Filter element assembly 30 is disposed within hollow 28 of canister 12 and generally includes a filter element 44 and a pair of end caps 46, 48. Filter element 44 defines bore 38, which is aligned with and is in fluid communication with central fluid outlet 18. Bore 38 is in filtered fluid communication with plural fluid inlets 20 through filter element 44. Optionally, filter element assembly 30 may include cylindrical center tube 32 about which filter element 44 is concentrically disposed. Center tube 32 includes center tube wall 34 having a plurality of apertures 36, which are in filtered communication with fluid inlets 20.

Filter element 44 also includes first and second ends 40, 42 which sealingly engage first and second end caps 46, 48, respectively, to prevent unfiltered fluid from entering bore 38. End cap 46 includes an outer perimeter region 47 that is aligned with and supports filter element 44. End cap 46 also includes center portion 49, which may be recessed to fit within bore 38. Reversible element guide 50 is positioned between end cap 46 and closed end 14 of canister 12 spacing filter element assembly 30 from closed end 14 of canister 12.

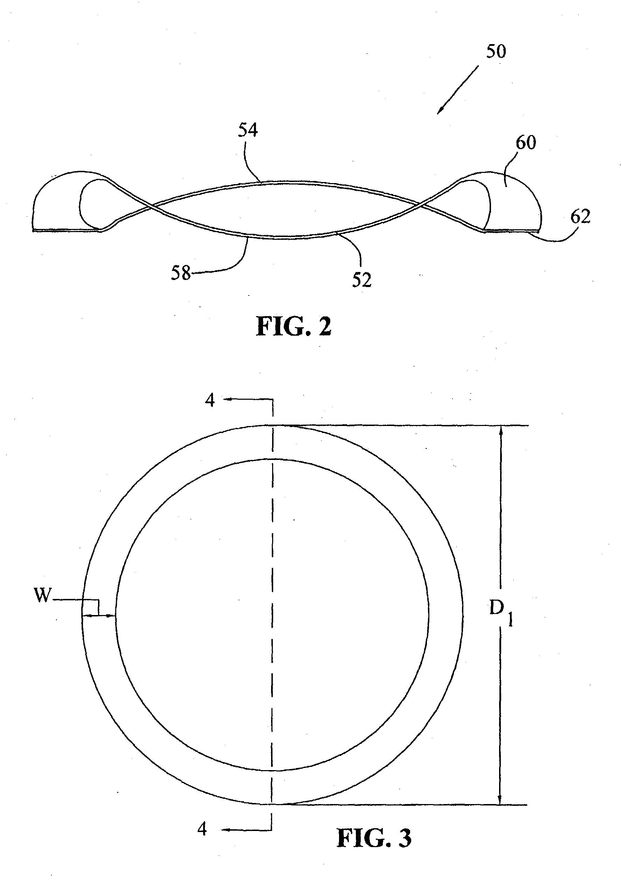

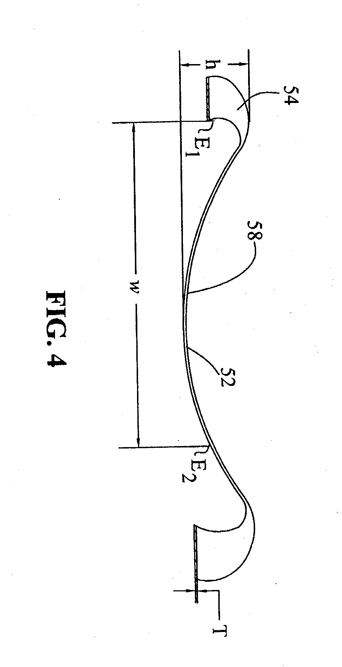

Referring now to FIGS. 2-4, reversible element guide 50 may be a ringed shaped wave spring having diameter D₁, width W and thickness T. Wave spring 50 includes a plurality of waves or undulations 52, each defined by a wave length w measured from a first equilibrium point E₁ to a second equilibrium point E₂. Each undulation 52 includes peak/crest 54, valley 58 and height h, which is measured from peak 54 to valley 58. As illustrated in FIG. 2, reversible element guide 50 has first side 60 and second side 62. The first side 60 is shaped substantially the same as second side 62, and consequently element guide 50 is reversible such that it may be disposed between the closed end 14 of canister 12 and first end cap 46 with either first side 60 bearing against end cap 46, or second side 62 bearing against end cap 46. Because element guide 50 is reversible, there is no right side and the element guide 50 may be efficiently and automatically dropped in canister 12 during assembly.

Referring back to FIGS. 1 and 3, diameter D₁ is sized such that width W of element guide 50 contacts outer perimeter region 47, rather than the center portion 49 of end cap 46. In this arrangement, element guide 50 adds column strength to filter assembly 30 enabling filter assembly 30 to more firmly seat against bottom assembly 24. This added column strength also enables the use of a canister having a flat-shaped closed end, as well as a dome-shaped closed end.

In addition, the reversible element guide need not necessarily be custom designed to engage a depression or recessed center portion of the end cap. Instead, readily available wave springs may be used and are available in many sizes. In addition, wave springs are known to have precise load deflection characteristics. Consequently, use of the element guide of the present invention results in a fluid filter assembly that may be less expensive to produce and may provide more consistent load deflection characteristics from filter to filter.

Although the reversible element guide 50 need not be custom-manufactured to engage the center portion of end cap 46, the load bearing capacity and load deflection characteristics may be customized by varying the diameter D₁ width W, and/or thickness T of reversible wave spring 50. Such variations may also serve to adjust the spacing of the filter assembly 30 from closed end 14 of canister 12, thereby enabling the use of canisters of different sizes and shapes. These characteristics may also be tailored by modifying the wave length w and/or height h of the undulations. Furthermore, the characteristics of reversible element guide 50 may be adjusted by varying the material of which reversible element guide 50 is composed. It is contemplated that element guide 50 may be made of any solid deflectable material such as steel, spring steel, brass, aluminum, plastic, elastomers, and/or composites thereof.

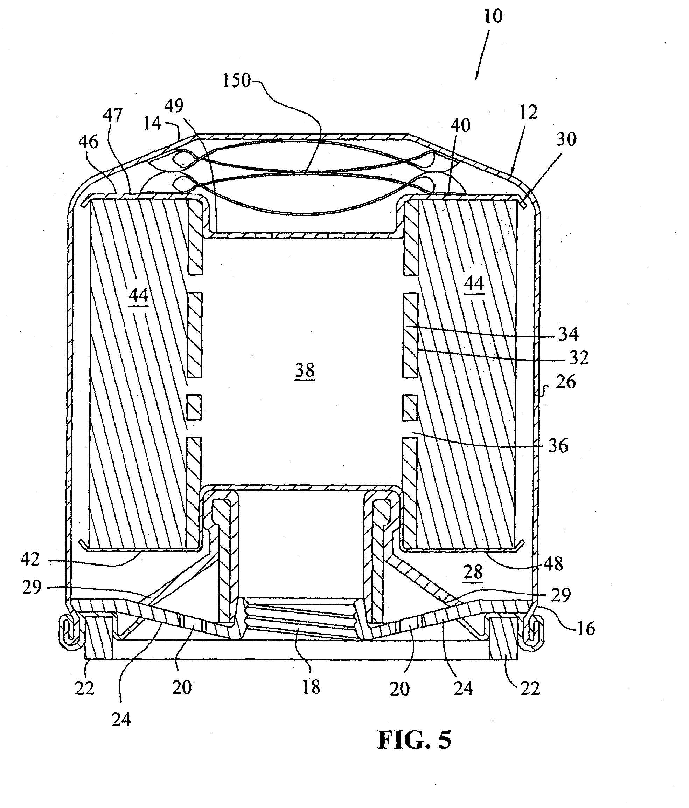

The present invention also contemplates using a multi-turn wave spring as the reversible element guide 150, as shown in FIG. 5. Such embodiment may be used to increase the space between filter assembly 30 and closed end 14 of canister 12 and/or to accommodate greater load deflection needs.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A fluid filter assembly comprising:
a canister having a closed end and an open end;
a filter element assembly disposed within said canister and having a first end adjacent said closed end of said canister and a second end adjacent said open end of said canister; and
a reversible element guide disposed within said canister between said closed end of said canister and said first end of said filter element assembly.

2. The fluid filter assembly of claim 1 wherein said reversible element guide is a wave spring.

3. The fluid filter assembly of claim 2 wherein said wave spring has a ring shape and includes a plurality of undulations.

4. The fluid filter assembly of claim 1 wherein said reversible element guide has a first side and a second side, said first side shaped substantially the same as said second side.

5. The fluid filter assembly of claim 4 wherein said reversible element guide is positioned in either one of two positions, said two positions consisting of a first position wherein said first side bears against said closed end of said canister and a second position wherein said second side bears against said closed end of said canister.

6. The fluid filter assembly of any preceding claim 1 wherein said first end of said filter element assembly comprises an outer perimeter region, said reversible element guide bearing against said outer perimeter region of said first end of said filter element assembly.

7. The fluid filter assembly of any preceding claim wherein said reversible element guide is comprised of steel, spring steel, brass, aluminum, plastics, elastomers, and/or composites thereof.

8. The fluid filter assembly of claim 2 wherein said wave spring is a single turn wave spring.

9. The fluid filter assembly of claim 2 wherein said wave spring is a multi-turn wave spring.

10. The fluid filter assembly of claim 6 wherein said reversible element guide is positioned in either a first position, wherein said first side bears against said outer perimeter of said first end of said filter element assembly, or a second position, wherein said second side bears against said outer perimeter of said first end of said filter element assembly.

11. The fluid filter assembly of claim 6 wherein said reversible element guide is a wave spring and said wave spring is a single turn wave spring.

12. The fluid filter assembly of claim 6 wherein said reversible element guide is a wave spring and said wave spring is comprised of steel, spring steel, brass, aluminum, plastics, elastomers, and/or composites thereof.

13. A fluid filter assembly comprising:
a canister having closed end and an open end;
a filter element assembly disposed within said canister and having a first end adjacent said closed end and a second end adjacent said open end; and
a wave spring element guide disposed within said canister between said closed end of said canister and said first end of said filter element assembly, said wave spring element guide having a ring shape and a plurality of undulations.

14. The fluid filter assembly of claim 13 wherein said element guide has a first side and a second side, said first side shaped substantially the same as said second side.

15. The fluid filter assembly of claim 14 wherein said wave spring element guide is reversible such that said wave spring element guide is positioned in either a first position, wherein said first side bears against said closed end of said canister, or a second position, wherein said second side bears against said closed end of said canister.

16. The fluid filter assembly of claim 13 wherein said first end of said filter element assembly comprises an outer perimeter region, said wave spring element bearing against said outer perimeter region of said first end of said filter element assembly.

17. The fluid filter assembly of claim 13 wherein said wave spring element guide is comprised of steel, brass, aluminum, plastic, elastomers, and/or composites thereof.
